## Europäisches Patentamt

## European Patent Office

## Office européen des brevets

(19)

(11) Veröffentlichungsnummer: **0 104 681**
**B1**

(12) # EUROPÄISCHE PATENTSCHRIFT

(45) Veröffentlichungstag der Patentschrift:
**10.06.87**

(51) Int. Cl.⁴: **H 04 N 9/64**

(21) Anmeldenummer: **83201223.1**

(22) Anmeldetag: **25.08.83**

(54) Schaltungsanordnung zum Umwandeln eines analogen Farbvideosignals in ein digitales Signal.

(30) Priorität: **31.08.82 DE 3232316**

(43) Veröffentlichungstag der Anmeldung:
**04.04.84 Patentblatt 84/14**

(45) Bekanntmachung des Hinweises auf die Patenterteilung:
**10.06.87 Patentblatt 87/24**

(84) Benannte Vertragsstaaten:
**DE FR GB**

(56) Entgegenhaltungen:
**NACHRICHTENTECHNISCHE ZEITSCHRIFT, Band 35, Nr. 8, August 1982, Seiten 524-529, Berlin, DE; M. JACOBSEN et al.: "Digitaler PAL-decoder für Farbfernsehempfänger"**

(73) Patentinhaber: **Philips Patentverwaltung GmbH, Billstrasse 80, D-2000 Hamburg 28 (DE)**

(84) Benannte Vertragsstaaten: **DE**

(73) Patentinhaber: **N.V. Philips' Gloeilampenfabrieken, Groenewoudseweg 1, NL- 5621 BA Eindhoven (NL)**

(84) Benannte Vertragsstaaten: **FR GB**

(72) Erfinder: **Pech, Eckhart, Am Wolkenbarg 28, D-2071 Ammersbek 1 (DE)**

(74) Vertreter: **Hartmann, Heinrich, Dipl.- Ing., Philips Patentverwaltung GmbH Billstrasse 80 Postfach 10 51 49, D-2000 Hamburg 28 (DE)**

EP 0 104 681 B1

**Beschreibung**

Die Erfindung bezieht sich auf eine Schaltungsanordnung, in der ein ankommendes analoges Farbvideosignal, das aus einem Helligkeitssignal und einem mit Farbsignalen (Farbdifferenzsignalen) modulierten Farbträger (Farbartsignal) zusammengesetzt ist, umgewandelt wird in ein digitales Helligkeitssignal und zwei digitale Farbsignale, bei der das Farbvideosignal einem Analog-Digital-Wandler zugeführt wird, der mit einem etwa einem Vielfachen der Zeilenfreuqenz entsprechenden Takt arbeitet, wobei das digitalisierte Farbartsignal demoduliert wird und zwei digitale Farbsignale erhalten werden (siehe NTZ, Band 35, Nr. 8, August 1982, Seiten 524 - 529).

Wenn eine solche Schaltung mit Bildspeichern zusammenarbeitet, ist in Betracht zu ziehen, daß die Zeilenfrequenz (insbesondere bei Einspeisung des Farbvideosignals von Videorecordern) nicht konstant ist und in kürzeren oder längeren Abständen schwankt. Dann soll auch der für die Digitalisierung erforderliche Takt mit der Zeilenfrequenz verknüpft sein, insbesondere ein ganzzahliges Vielfaches der Zeilenfrequenz sein, damit die Bildpunkte der Zeilen untereinander eine definierte Lage haben. Auf der anderen Seite erfolgt die Demodulation der auf einen Farbträger modulierten Farbsignale zweckmäßig mit einem Takt, der ein Vielfaches der Farbträgerfrequenz ist. Dieser Takt entspricht aber bei verschiedenen Farbfernseh-Normen auch nicht einem ganzen Vielfachen der Zeilenfrequenz.

Der Erfindung liegt die Aufgabe zugrunde, eine Schaltungsanordnung anzugeben, in der die analogen Farbvideosignale in einfacher Weise umgewandelt werden können in digitale Signale für Helligkeit und Farben, die mit dem gleichen, einem Vielfachen der Zeilenfrequenz entsprechenden Takt arbeiten.

Diese Aufgabe wird nach der Erfindung dadurch gelöst, daß der Helligkeitssignalanteil des Farbvideosignals einem ersten Analog-Digital-Wandler zugeführt wird, der mit einem, einem Vielfachen der Zeilenfrequenz des ankommenden Signals entsprechenden Takt arbeitet, und daß das so digitalisierte Helligkeitssignal, gegebenenfalls über ein Tiefpaßfilter, einer ersten Ausgangsklemme zugeführt wird, und daß das Farbvideosignal über ein das Farbartsignal hindurchlassendes Filter, z.B. über einen Bandpaß oder einen Hochpaß, einem zweiten Analog-Digital-Wandler zugeführt wird, der mit einem einem Vielfachen der Farbträgerfrequenz entsprechenden Takt arbeitet, und daß das digitalisierende Farbartsignal demoduliert wird, und daß die beiden so erhaltenen Farbsignale von je einem ersten bzw. einem zweiten Schreib-Lese-Speicher zugeführt werden, dessen Einschreibteil entsprechend einem der Farbträgerfrequenz oder einem Vielfachen davon entsprechenden Takt arbeitet und daß der Ausleseteil jedes Schreib-Lese-Speichers arbeitet mit einem Takt, der aus einem Vielfachen der Zeilenfrequenz des ankommenden Farbvideosignals abgeleitet ist, der jedoch über eine Adreßsteuerstufe derart korrigiert ist, daß im Ausgangssignal die gemäß dem Takt der Einschreibstufe eingeschriebenen Farbsignalwerte auch bei Abweichungen der Zeilenfrequenz vom Normwert über die ganze ausgelesene Zeilenlänge verteilt werden.

So wird erreicht, daß einerseits die Farbdemodulation optimal mit einem von der Farbträgerfrequenz abgeleiteten Takt erfolgen kann und das Helligkeitssignal mit einem Takt digitalisiert wird, der eine definierte Phasenlage zum Zeilenwechsel hat, wobei dennoch die schließlich erhaltenen Farbsignale mit dem gleichen Takt arbeiten wie das Helligkeitssignal.

Vorzugsweise ist die Schaltungsanordnung so ausgebildet, daß in der Adreßsteuerstufe die Zahl der innerhalb eines Zeilenintervalles aufgezeichneten ditigalen Farbsignalwerte und die Zahl der gemäß dem Lese-Takt in einem Zeilenintervall erforderlichen Farbsignalwerte verglichen und beim Auslesen die Adressen der eingeschriebenen Farbsignalwerte mindestens einmal verdoppelt und übersprungen werden derart, daß die eingeschriebenen Farbsignale gleichmäßig über das ganze Ausleseintervall verteilt sind. Die demodulierten Farbsignale und das Helligkeitssignal haben zunächst unterschiedliche Zahlen von Amplitudenwerten innerhalb einer Zeile bzw. innerhalb des der Bildsignalübertragung dienenden Zeilenteiles. Dies wird nach der erwähnten Ausführungsform in mehreren Schritten ausgeglichen immer dann, wenn eine Positive oder negative Differenz von einem Abtastpunkt zwischen den beiden Abtastreihen besteht.

Da auf diese Weise nach jeder Korrektur wieder eine momentane Phasengleichheit der Abtastwerte hergestellt wird, ist es nicht erforderlich, daß der Schreib-Lese-Speicher für die ganze Länge der Zeile bemessen ist. Er braucht höchstens etwa die Hälfte der Farbsignalwerte einer Zeile aufnehmen zu können, wobei das Einspeichern und danach auch das Auslesen von neuem beginnt, sobald das Auslesen durch Wiederholen oder Überspringen eines eingeschriebenen Wertes korrigiert ist. Dies geschieht vorzugsweise so, daß das Auslesen einige, z.B. drei bis zehn, Takte später einsetzt als das Einschreiben, und daß das Einschreiben auf den Anfang zurückgesetzt wird nach etwa der gleichen Anzahl von Takten, nach der beim Auslesen eine Korrektur durch Verdoppeln oder Weglassen erfolgt.

Die für den Zeilenspeicher erforderlichen Adreßsignale werden vorzugsweise dadurch erhalten, daß die Steuerstufe enthält eine Subtraktionsstufe, in der die Anzahl der in ein Signalintervall einer Zeile fallende Takte des Schreibteiles des Speichers und die Anzahl der in das gleiche Intervall fallenden Takte des Ausleseteiles verglichen werden und der so erhaltene Differenzwert einer Umrechnungsstufe zugeführt wird, in der ein etwa dem Sollwert der im Einschreibintervall auftretenden Takte entsprechender Wert dividiert wird durch die genannte Differenz und mit dem erhaltenen Ergebnis die Anzahl der Schritte eines Adressenzählers eingestellt wird, der bei Beginn des Auslesens in Gang gesetzt wird und der nach der betreffenden eingestellten Zahl ein Signal liefert, durch das der abgegebene Adressenwert wiederholt oder ein Adressenwert übersprungen wird, je nachdem, ob das Vorzeichen der Differenz positiv oder negativ ist.

Das Helligkeitssignal enthält einerseits die Bildinhalt-Signale und andererseits die Austast- und Synchronsignale. Da diese beiden Signalarten getrennt weiterverarbeitet werden, braucht das Helligkeitssignal nicht im Ganzen digitalisiert zu werden. Eine Schaltungsanordnung nach der Erfindung kann daher zweckmäßig so ausgebildet sein, daß der zweite Analog/Digital-Wandler einerseits für den Amplitudenbereich der Bildinhaltssignale und andererseits für den Amplitudenbereich der Synchron- und gegebenenfalls Austastsignale umgeschaltet wird und an einem ersten Ausgang das digitalisierte Bildinhaltssignal und an einem zweiten Ausgang die digitalisierten Synchron- und gegebenenfalls Austastsignale auftreten.

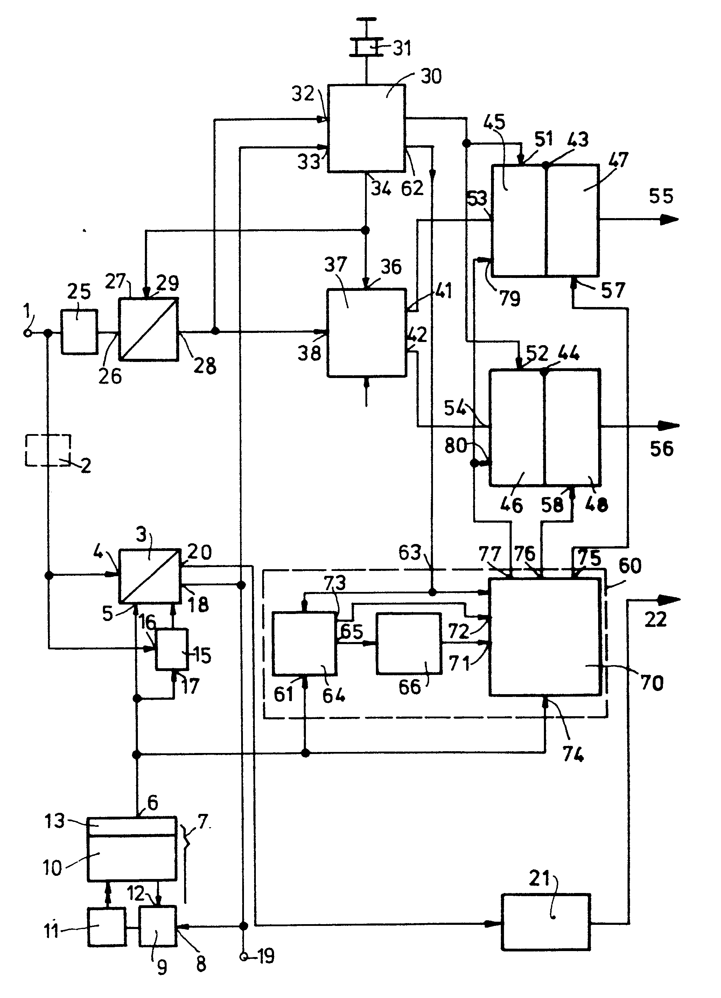

Die Erfindung wird nachstehend anhand eines in der Zeichnung dargestellten Blockschaltbildes näher erläutert.

An einer Klemme 1 wird das analoge Farbvideosignal (FBAS-Signal) zugeführt, das aus einem breitbandigen Helligkeitssignal und einem mit Farbsignalen modulierten Farbträger zusammengesetzt ist. Im Falle eines NTSC- oder eines PAL-Signals sind einem Farbträger die beiden Farbdifferenzsignale (R-Y) und (B-Y) gleichzeitig aufmoduliert. Im Falle eines SECAM-Signals werden die Farbdifferenzsignale auf abwechselnden Trägern in Frequenzmodulation übertragen.

Diese Farbvideosignale werden, gegebenenfalls über ein die Farbartsignale abschwächendes Tiefpaßfilter 2, einem ersten Analog/Digital-Wandler 3 an einem ersten Eingang 4 zugeführt. Der Wandler 3 erhält an einem zweiten Eingang 5 ein Taktsignal, das einem Vielfachen, z.B. dem 1135-fachen der Zeilenfrequenz des an der Klemme 1 zugeführten Signals entspricht. Das Taktsignal für den Eingang 5 wird vom Ausgang 6 einer Taktstufe 7 geliefert. Dieser werden an ihrem Eingang 8 die Zeilenimpulse zugeführt zu einem Phasendiskriminatorteil 9. In einem Oszillatorteil 10 wird die Taktfrequenz von 17,734375 MHz erzeugt und, durch 1135 geteilt, dem Phasendiskriminatorteil 9 am Eingang 12 zugeführt. Dieser liefert ein Regelsignal, das über einen Tiefpaß 11 zur Frequenzregelung dem Oszillator 10 zugeführt wird. Die Ausgangsschwingung des Oszillators 10 liefert, gegebenenfalls über einen Impulsformer 13, zum Ausgang 6 das Taktsignal für den Wandler 3.

Damit der Wandler 3 mit seinem Umfang von 7 bit optimal für das Bildsignal ausgenutzt werden kann, wird sein Amplitudenbereich auf den Bereich der Bildsignale oder auf den Bereich der Synchronsignale abwechselnd umgeschaltet. Dies geschieht mittels eines Umschaltsignals, das eine Schaltstufe 15 liefert, der an einem ersten Eingang 16 das Farbvideosignal und an einem zweiten Eingang 17 das Taktsignal vom Taktgenerator 7 zugeführt werden. In der Stufe 15 wird im Takte der Zeilenimpulse ein Umschaltsignal gebildet, das dem Intervall entspricht, in dem die Bildaustastsignale oder die Synchronsignale auftreten. Am Ausgang 18 des Wandlers 3 treten dann die abgetrennten Synchronimpulse auf, die über einen Ausgang 19 weiterer Verarbeitungsstufen zugeführt werden, und von denen die Zeilenimpulse über den Eingang 8 den Taktoszillator 7 synchronisieren.

Von einem Ausgang 20 der Stufe 3 wird das digitalisierte Helligkeitssignal entnommen und, vorzugsweise über ein Filter 21, zu einem Ausgang 22 geführt.

Das ankommende Signal von der Klemme 1 wird weiter über einen Hochpaß 25, der z.B. durch einen Kondensator gebildet sein kann, einem ersten Eingang 26 eines Analog-Digital-Wandlers 27 zugeführt, der ebenfalls 7 bit umfaßt und das digitalisierte Farbartsignal an einen Ausgang 28 liefert. An einem Eingang 29 wird dem Wandler 27 ein Taktsignal zugeführt von einem zweiten Taktoszillator 30. Dieser schwingt auf einer Harmonischen der Farbträgerfrequenz, z.B. mit einem Quarz 31, der gegebenenfalls je nach der empfangenen Norm auf eine andere Frequenz umschaltbar ist und bei PAL-Empfang auf etwa 17,73 MHz schwingt. Dem Oszillator 30 wird an einem Eingang 32 vom Ausgang 28 des Wandlers 29 das Farbsynchronsignal zugeführt und mit Hilfe der vom Ausgang 18 des Wandlers 3 erhaltenen Synchronsignale ausgetastet, die einem Eingang 33 des Oszillators 30 zugeführt werden. Der Oszillator 30 wird dadurch auf die Frequenz und die Phase des Farbsynchronimpulses synchronisiert. Er liefert an seinem Ausgang 34 ein Taktsignal, das dem Vierfachen der Farbträgerfrequenz entspricht und dem Takteingang 29 des Wandlers 27 und weiter einem Referenzsignaleingang 36 eines Farbdemodulators 37 zugeführt wird, der an seinem Eingang 38 die digitalen Farbsignale erhält.

An den Ausgängen 41 und 42 des Demodulators 37 treten in digitaler Form das rote und das blaue Farbdifferenzsignal (R-Y) und (B-Y) auf. Diese werden einem ersten Signalspeicher 43 bzw. einem zweiten Signalspeicher 44 zugeführt, die je aus einem Schreibteil 45 bzw. 46 und einem Leseteil 47 bzw. 48 bestehen. Den Speichern 43 und 44 werden weiter an Eingängen 51 und 52 Taktsignale vom Oszillator 30 zugeführt. Die an den Eingängen 53 bzw. 54 den Speichern 43 bzw. 44 zugeführten Farbsignale sind nicht mehr einem Träger aufmoduliert, sondern videofrequent. Die den Eingängen 51 und 52 zugeführten Taktsignale brauchen somit nur wenigstens das Doppelte der höchsten Frequenz dieser Farbsignale zu betragen, z.B. 2,2 MHz entsprechend der Hälfte der ursprünglichen Farbträgerfrequenz.

Die so eingespeicherten Farbsignalwerte werden im Leseteil 47 bzw. 48 ausgelesen und an einem Ausgang 55 bzw. 56 übertragen unter Steuerung von Adreßsignalen, die einem Eingang 57 des Speichers 43 bzw. einem Eingang 58 des Speichers 44 am Leseteil 47 bzw. 48 zugeführt werden.

Diese Adreßsignale werden von einer Adreßsteuerstufe 60 geliefert. Dieser Stufe 60 wird an einem Eingang 61 das im Wandler 3 für das Helligkeitssignal benutzte Taktsignal zugeführt. Dem Oszillator 30 wird an einem Ausgang 62 ein Signal entnommen, das einem Vielfachen der Farbträgerfrequenz entspricht und bei normgerechter Farbträgerfrequenz und normgerechter Zeilenfrequenz wenigstens annähernd mit dem Taktsignal am Eingang 5 des Wandlers 3 übereinstimmt. Das Signal vom Ausgang 62 wird zu einem Eingang 63 in der Stufe 60 geführt und in einer Vergleichsstufe 64 mit dem Signal vom Eingang 61 verglichen. Die so festgestellte Differenz tritt an einem Ausgang 65 der Stufe 64 auf und wird einer Rechenstufe 66 zugeführt. In dieser Stufe, die z.B. in Form einer Tabelle aufgebaut sein kann, wird der Sollwert der Abtastpunkte des Wandlers 3 im Intervall der Bildsignale einer Zeile, z.B. 284, durch die ermittelte Differenz dividiert. Es wird dann - ohne Berücksichtigung von Bruchteilen - ein Zahlenwert erhalten, der angibt, nach welcher Zahl von Abtastpunkten des Helligkeitssignals die Zahl der Abtastpunkte der Farbsignale einen Punkt mehr oder weniger beträgt. Dieser Wert wird dem Adressengeber 70 an einem ersten Eingang 71 zugeführt, wobei an einem zweiten Eingang 72 von einem Ausgang 73 des Vergleichers 64 ein Signal zugeführt wird, das daß Vorzeichen des Unterschieds angibt. Der Adressengeber 70 arbeitet mit einem an seinem Eingang 74 zugeführten Takt, der dem Ausgang 6 des Oszillators 7 entnommen ist. Der Adressengeber 60 liefert an seinen Ausgängen 75 bzw. 76 Adreßsteuersignale für die Eingänge 57 bzw. 58 für die Leseteile 47 bzw. 48 der Speicher 43 bzw. 44. Die von den Ausgängen 75 und 76 gelieferten Signale sind derart, daß die eingespeicherten Werte im Takte eines Vielfachen der Zeilenfrequenz ausgelesen werden solange, bis, auf das gleiche Bildintervall bezogen, beim Auslesen ein Takt mehr oder ein Takt weniger wirksam geworden ist als im gleichen Zeitintervall beim Einlesen wirksam war. Dann wird durch das Adreßsteuersignal entweder ein Speicherwert doppelt abgetastet oder ein Speicherwert übersprungen, so daß beim nächsten Ausleseintervall wieder mit dem zugeordneten Wert des Einleseintervalls begonnen wird.

Von einem Ausgang 77 der Adreßsteuerstufe · 60 wird an die Eingänge 79 bzw. 80 der Schreib-Lesespeicher 43 bzw. 44 ein Setzsignal geliefert, mit dem der Schreibteil und, gegebenenfalls um einige Tastintervalle später, der Leseteil in den Anfangszustand zurückgesetzt wird.

Infolge der geringeren Bandbreite der Farbsignale brauchen die Speicher 43 und 44 nur für eine Anzahl von Signalen bemessen zu sein, die etwa dem Doppelten der Farbsignal-Bandbreite, z.B. der Farbträgerfrequenz, entspricht. Da die abgegebenen Signale mit dem Helligkeitssignal zusammenwirken sollen, das eine wesentlich höhere, etwa dem Vierfachen der Farbträgerfrequenz entsprechende, Abtastrate hat, kann bei der Abtastung im Teil 47 bzw. 48 jeder eingespeicherte Wert viermal hintereinander abgetastet werden, um die gleiche Rate zu erhalten.

Die Speicher 43 und 44 brauchen höchstens für die Abtastwerte der Hälfte einer Zeile bemessen zu sein. Wenn nämlich in der Stufe 64 keine Frequenzdifferenz festgestellt wird, ist eine Zwischenspeicherung nicht erforderlich, gegebenenfalls lediglich eine Verzögerung um einige Abtastintervalle. Wenn dagegen eine Differenz von einem Punkt auftritt, erfolgt durch die Schreib-Lese-Speicher 43 und 44 eine Korrektur nach einer halben Zeile. Ist die Differenz größer, so erfolgt die Korrektur nach einem entsprechenden Bruchteil einer Zeile. Wenn jeweils nach der Korrektur wieder auf den Anfang zurückgesetzt wird, braucht also der Zeilenspeicher nicht länger zu sein.

**Patentansprüche**

1. Schaltungsanordnung, in der ein ankommendes analoges Farbvideosignal, das aus einem Helligkeitssignal und einem mit Farbsignalen (Farbdifferenzsignalen) modulierten Farbträger (Farbartsignal) zusammengesetzt ist, umgewandelt wird in ein digitales Helligkeitssignal und zwei digitale Farbsignale, bei der das Farbvideosignal einem Analog-Digital-Wandler zugeführt wird, der mit einem etwa einem Vielfachen der Zeilenfrequenz entsprechenden Takt arbeitet, wobei das digitalisierte Farbartsignal demoduliert wird und zwei digitale Farbsignale erhalten werden, dadurch gekennzeichnet, daß der Helligkeitssignalanteil des Farbvideosignals einem ersten Analog-Digital-Wandler (3) zugeführt wird, der mit einem, einem Vielfachen der Zeilenfrequenz des ankommenden Signals entsprechenden Takt arbeitet, und daß das so digitalisierte Helligkeitssignal, gegebenenfalls über ein Tiefpaßfilter (21), einer ersten Ausgangsklemme (22) zugeführt wird, und daß das Farbvideosignal (1) über ein das Farbartsignal hindurchlassendes Filter (25), z.B. über einen Bandpaß oder einen Hochpaß, einem zweiten Analog-Digital-Wandler (27) zugeführt wird, der mit einem einem Vielfachen der Farbträgerfrequenz ($F_0$) entsprechenden Takt

arbeitet, und daß das digitalisierende Farbartsignal (in 37) demoduliert wird, und daß die beiden so erhaltenen digitalen Farbsignale von (41 bzw. 42) je einem ersten bzw. einem zweiten Schreib-Lese-Speicher (43 bzw. 44) zugeführt werden, dessen Einschreibteil (45 bzw. 46) entsprechend einem der Farbträgerfrequenz oder einem Vielfachen davon entsprechenden Takt arbeitet und daß der Ausleseteil (47 bzw. 48) jedes Schreib-Lese-Speichers arbeitet mit einem Takt, der aus einem Vielfachen der Zeilenfrequenz des ankommenden Farbvideosignals abgeleitet ist, der jedoch über eine Adreßsteuerstufe (60) derart korrigiert ist, daß im Ausgangssignal die gemäß dem Takt der Einschreibstufe (45 bzw. 46) eingeschriebenen Farbsignalwerte auch bei Abweichungen der Zeilenfrequenz vom Normwert über die ganze ausgelesene Zeilenlänge verteilt werden.

2. Schaltungsanordnung nach Anspruch 1, dadurch gekennzeichnet, daß in der Adreßsteuerstufe (60) die Zahl der innerhalb eines Zeilenintervalles aufgezeichneten digitalen Farbsignalwerte und die Zahl der gemäß dem Lese-Takt in einem Zeilenintervall erforderlichen Farbsignalwerte verglichen und beim Auslesen die Adressen der eingeschriebenen Farbsignalwerte mindestens einmal verdoppelt oder übersprungen werden, derart, daß die eingeschriebenen Farbsignale gleichmäßig über das ganze Ausleseintevall verteilt sind.

3. Schaltungsanordnung nach Anspruch 1 oder 2, dadurch gekennzeichnet, daß der Schreib-Lese-Speicher (43 bzw. 44) höchstens etwa die Hälfte der Farbsignalwerte einer Zeile aufnehmen kann und daß das Einspeichern und danach auch das Auslesen von neuem beginnt, sobald das Auslesen durch Wiederholen oder Überspringen eines eingeschriebenen Wertes korrigiert ist.

4. Schaltungsanordnung nach anspruch 3, dadurch gekennzeichnet, daß das Auslesen einige, z.B. drei bis zehn, Takte später einsetzt als das Einschreiben, und daß das Einschreiben auf den Anfang zurückgesetzt wird nach etwa der gleichen Anzahl von Takten, nach der beim Auslesen eine Korrektur durch Verdoppeln oder Weglassen erfolgt.

5. Schaltungsanordnung nach einem der vorhergehenden Ansprüche, dadurch gekennzeichnet, daß die Steuerstufe (60) enthält eine Subtraktionsstufe (64), in der die Anzahl der in ein Signalintervall einer Zeile fallenden Takte des Schreibteiles (45 bzw. 46) des Speichers und die Anzahl der in das gleiche Intervall fallenden Takte des Ausleseteiles (47 bzw 48) verglichen werden und der so erhaltene Differenzwert einer Umrechnungsstufe (66) zugeführt wird, in der ein etwa dem Sollwert der im Einschreibintervall auftretenden Takte entsprechender Wert dividiert wird durch die genannte Differenz und mit dem erhaltenen Ergebnis die Anzahl der Schritte eines Adressenzählers (70) eingestellt wird, der bei Beginn des Auslesens in Gang gesetzt wird und der nach der betreffenden eingestellten Zahl ein Signal liefert, durch das der abgegebene Adressenwert wiederholt oder ein Adressenwert übersprungen wird, je nach dem, ob das Vorzeichen der Differenz positiv oder negativ ist.

6. Schaltungsanordnung nach einem der vorangehenden Ansprüche, dadurch gekennzeichnet, daß der zweite Analog-Digital-Wandler (3) einerseits für den Amplitudenbereich der Bildinhaltssignale und andererseits für den Amplitudenbereich der Synchron- und gegebenenfalls Austastsignale umgeschaltet wird und an einem ersten Ausgang (20) das digitalisierte Bildinhaltssignal und an einem zweiten Ausgang (18) die digitalisierten Synchron- und gegebenenfalls Austastsignale auftreten.

**Claims**

1. A circuit arrangement in which an incoming analog colour video signal composed of a luminance signal and a chrominance subcarrier (chrominance signal) which is modulated by colour signals (colour difference signals) is converted into a digital luminance signal and two digital colour signals, the colour video signal being applied to an analog-to-digital converter which operates at a clock rate which corresponds to approximately a multiple of the line frequency, the digitized chrominance signal being demodulated and two digital colour signals being obtained, characterized in that the luminance signal part of the colour video signal is applied to a first analog-to-digital converter (3) which operates at a clock rate corresponding to a multiple of the line frequency of the incoming signal and that the luminance signal thus digitized is applied to a first output terminal (22), possibly through a low-pass filter (21), and that the colour video signal (1) is applied through a filter (25) which passes the chrominance signal for example through a band-pass or a high-pass filter, to a second analog-to-digital converter (27) which operates at a clock rate corresponding to a multiple of the chrominance subcarrier frequency ($F_O$), and that the digitized chrominance signal (in 37) is demodulated and that the two digital colour signals, thus obtained, are each applied (from 41 or 42) to a first or a second write-read store (43 or 44) whose write section (45 or 46) operates in accordance with a clock rate corresponding to the chrominance subcarrier frequency or a muptiple thereof, and that the read section (47 or 48) of each write-read store operates at a clock rate which is derived from a multiple of the line frequency of the incoming colour video signal, but which is corrected <u>via</u> an address control stage (60) that in the output signal the colour signal values written-in in accordance with the write clock of the writing stage (45 or 46) are distributed over the overall read line-length also when the line frequency deviates from the standard value.

2. A circuit arrangement as claimed in Claim 1, characterized in that in the address control stage (60) the number of digital colour signal values stored within a line interval and the number of colour signal values required in accordance with the read clock in a line interval are compared and during reading the addresses of the stored colour signal values are doubled at least once or are skipped in such a way that the stored colour signals are uniformly distributed over the overall read interval.

3. A circuit arrangement as claimed in Claim 1 or 2, characterized in that the write-read store (43 or 44) cannot store more than approximately half the colour signal values of a line and that storing and thereafter also reading starts again as soon as the reading obtained by repetition or skipping of a recorded value has been corrected.

4. A circuit arrangement as claimed in Claim 3, characterized in that reading starts some, for example, three to ten, clock signals later than writing, and that the writing operation is reset to the start after approximately the same number of clock signals, after which, during reading, a correction by doubling or omission is effected.

5. A circuit arrangement as claimed in any of the preceding Claims, characterized in that the control stage (60) comprises a subtracting stage (64) in which the number of clock pulses of the read section (45 or 46) of the store within a signal interval of a line and the number of clock pulses of the read section (47 or 48) within the same interval are compared and the difference value thus obtained is applied to an arithmetic stage (66) in which a value which approximately corresponds to the target value of the clock signal occurring in a write interval is divided by the said difference and the number of steps of an address counter (70) is adjusted by means of the result obtained, which address counter is started at the begining of the reading operation and, after the relevant adjusted number produces a signal wherby the produced address value is repeated or an address value is skipped, depending on whether the sign of the difference is positive or negative.

6. A circuit arrangement as claimed in any of the preceding Claims, characterized in that the second analog-to-digital converter (3) is changed over on the one hand for the amplitude range of the picture content signals and on the other hand for the amplitude range of the synchronizing and possibly blanking signals and that the digitized picture content signals occur at a first output (20) and the digitized synchronizing and possibly blanking signals occur at a second output (18).

## Revendications

1 - Montage, dans lequel un signal vidéo couleur analogique arrivant, qui est formé d'un signal de luminosité et d'une porteuse couleur (signal de chrominance) modulée par des signaux couleur (signaux de différence de couleur), est converti en un signal de luminosité numérique et en deux signaux couleur numériques, le signal vidéo couleur étant appliqué à un convertisseur analogique-numérique qui travaille à un rythme correspondant environ à un multiple de la fréquence de ligne, tandis que le signal de chrominance digitalisé est démodulé et que deux signaux couleur numériques sont obtenus, caractérisé en ce que la fraction de signal de luminosité du signal vidéo couleur est appliquée à un premier convertisseur analogique-numérique (3), qui fonctionne à un rythme correspondant à un multiple de la fréquence de ligne du signal arrivant, et que le signal de luminosité ainsi digitalisé est appliqué, le cas échéant par l'intermédiaire d'un filtre passe-bas (21), à une première borne de sortie (22) et que le signal vidéo couleur (1) est appliqué, par l'intermédiaire d'un filtre (25) laissant passer le signal de chrominance, par exemple par l'intermédiaire d'un filtre passe-bande ou d'un filtre passe-haut, à un second convertisseur analogique-numérique (27) qui fonctionne à un rythme correspondant à un multiple de la fréquence de la porteuse couleur $F_0$, et que le signal de chrominance digitalisé est démodulé (en 37), et que les deux signaux couleur numériques ainsi obtenus sont amenés chacun (41 ou 42) à une première ou à une seconde mémoire vive (43 ou 44) dont la partie à inscription (45 ou 46) fonctionne à un rythme correspondant à la fréquence porteuse couleur ou à un multiple de celle-ci et que la partie de lecture (47 ou 48) de chaque mémoire vive fonctionne à un rythme qui est dérivé d'un multiple de la fréquence de ligne du signal vidéo couleur arrivant, qui est cependant corrigé par l'intermédiaire d'un étage de commande d'adresse (60) d'une manière telle que dans le signal de sortie, les valeurs de signaux couleur enregistrées selon le rythme de l'étage d'inscription (45 ou 46) soient réparties sur toute la longueur de ligne lue, même dans le cas d'écarts de la fréquence de ligne par rapport à la valeur normalisée.

2 - Montage suivant la revendication 1, caractérisé en ce que dans l'étage de commande d'adresse (60), le nombre des valeurs de signaux couleur numériques enregistrées dans un intervalle de ligne et le nombre des valeurs de signaux couleur requis selon le rythme de lecture dans un intervalle de ligne sont comparés et, lors de la lecture, les adresses des valeurs de signaux couleur inscrites, sont au moins une fois doublées ou sautées d'une manière telle que les signaux couleur inscrits soient uniformément répartis sur la totalité de l'intervalle de lecture.

3 - Montage suivant la revendication 1 ou 2, caractérisé en ce que la mémoire vive (43 ou 44) peut recevoir au maximum environ la moitié des valeurs de signaux couleur d'une ligne et que le stockage et ensuite aussi la lecture recommencent dès que la lecture est corrigée par répétition ou par saut d'une valeur inscrite.

4 - Montage suivant la revendication 3, caractérisé en ce que la lecture commence quelques impulsions d'horloge, par exemple trois à dix, plus tard que l'inscription et que l'inscription est ramenée au début après environ le même nombre d'impulsions d'horloge que celui après lequel, lors de la lecture, une correction se produit par doublage ou omission.

5 - Montage suivant l'une quelconque des revendications précédentes caractérisé en ce que l'étage de commande (60) contient un étage soustracteur (64), dans lequel le nombre des impulsions d'horloge tombant dans un intervalle de signaux d'une ligne de la partie d'inscription (45 ou 46) de la mémoire et le nombre des impulsions d'horloge tombant dans le même intervalle de la partie de lecture (47 ou 48) sont comparés et la valeur de différence ainsi obtenue est appliquée à un étage de calcul (66), dans lequel une valeur correspondant environ à la valeur de consigne des impulsions d'horloge apparaissant dans l'intervalle d'écriture est divisée par la dite différence et à l'aide du résultat obtenu, le nombre des pas d'un compteur d'adresses (70) est réglé, ce compteur étant mis en route au début de la lecture et fournissait après le nombre réglé en question, un signal par lequel la valeur d'adresse fournie est répétée ou une valeur d'adresse est sautée, selon que le signe de la différence est positif ou négatif.

6 - Montage suivant l'une quelconque des revendications précédentes, caractérisé en ce que le second convertisseur analogique-numérique (3) est commuté d'une part, pour le domaine d'amplitudes des signaux de contenu d'image et d'autre part, pour le domaine d'amplitudes des signaux de synchronisation et le cas échéant de suppression, le signal de contenu d'image digitalisé apparaissant à une première sortie (20) et les signaux de synchronisation et le cas échéant les signaux de suppression digitalisés apparaissant à une seconde sortie (18).